**Europäisches Patentamt**

**European Patent Office**

**Office européen des brevets**

(11) Veröffentlichungsnummer: **0 257 284 B1**

# EUROPÄISCHE PATENTSCHRIFT

(45) Veröffentlichungstag der Patentschrift: **24.06.92**

(21) Anmeldenummer: **87110309.9**

(22) Anmeldetag: **16.07.87**

(51) Int. Cl.⁵: **C02F 1/74**, C23F 11/00

(54) Verfahren zum Anreichern von Abwässern mit geruchs- und/oder korrosionshindernden Zusatzstoffen.

(30) Priorität: **12.08.86 DE 3627344**

(43) Veröffentlichungstag der Anmeldung:
**02.03.88 Patentblatt 88/09**

(45) Bekanntmachung des Hinweises auf die
Patenterteilung:
**24.06.92 Patentblatt 92/26**

(84) Benannte Vertragsstaaten:
**AT BE CH ES FR GB GR IT LI LU NL SE**

(56) Entgegenhaltungen:
DE-A- 2 434 219
DE-A- 2 502 137
DE-B- 2 012 358

(73) Patentinhaber: **Kasperski, Erhard**
**Auf dem Beil 3**
**W-4690 Herne 1(DE)**

(72) Erfinder: **Kasperski, Erhard**
**Auf dem Beil 3**
**W-4690 Herne 1(DE)**

(74) Vertreter: **Schneiders, Josef, Dipl.-Ing.**
**Südring 8**
**W-4630 Bochum 1(DE)**

## Beschreibung

Die Erfindung bezieht sich auf ein Verfahren zum Behandeln von Abwasser in einem Druckbehälter, in den Druckluft von unten her eingeführt und im Abwasser fein verteilt wird und aus dem durch eine Auslauföffnung des Druckbehälters das mit dem Gas und gegebenenfalls einem weiteren Zusatzstoff behandelte Abwasser abgeführt wird.

Die Ableitung von Abwässern im städtischen oder industriellen Bereich stößt gewöhnlich auf Schwierigkeiten, wenn die Förderung der Abwässer in den Rohrleitungen unter einem zu geringen Druck erfolgt. Dies führt aufgrund der Bildung von Faulstoffen zu einer Geruchsbelästigung durch Schwefelverbindungen. Auch können nachgeschaltete Anlagenteile bzw. Rohrleitungen durch korrosive, noch nicht in Reaktion getretene Stoffe angegriffen werden. Aus diesem Grunde werden die Abwässerableitungen unter erhöhten Druck gesetzt, der z.B. in Druckbehältern, sei es solchen mit einem Inhalt von 50 Liter oder auch einigen Kubikmetern aufgebaut wird. Es sind auch schon Maßnahmen bekannt, um die Geruchsbildung durch zuführung von sauerstoffhaltigen Verbindungen zu mindern. Dies erfolgt gewöhnlich dadurch, daß in den Druckbehältern von oben Druckluft eingeführt wird.

Hierdurch wird jedoch keine entscheidende Geruchsminderung oder auch kein entscheidender Korrosionsschutz erreicht, weil der in der Druckluft enthaltene Sauerstoff sich nur in geringem Umfange mit den Abwässernvermischt oder letztere nur geringfügig durchsetzt.

Die DE-A-2 434 219 betrifft ein Verfahren zur dosierten Anreicherung von Frischwasser mit Ozon unter Druck zur Erzeugung von Trinkwasser, bei dem ein Behälter mit Frischwasser bis zu einer vorgegebenen Höhe gefüllt wird und während und unmittelbar nach dem Füllvorgang mit Ozon versetzt wird. Ein Regelmechanismus sorgt dafür, daß nach der Entnahme von Trinkwasser neues Frischwasser zugeführt und mit Ozon versetzt wird.

Der Erfindung liegt in erster Linie die Aufgabe zugrunde, die Zuführung von Zusatzstoffen und deren Durchsetzung im Druckbehälter zu erhöhen.

Die Aufgabe wird dadurch gelöst, daß erfindungsgemäß der Druckbehälter mit der Druckluft auf einen Maximaldruck gebracht und sodann das behandelte Abwasser unter Druck in einen an die Auslauföffnung anschließendes Rohrsystem abgeführt wird.

Eine Anwendungsmöglichkeit des erfindungsgemäßen Verfahrens besteht darin, daß die Druckluft über eine Druckleitung und eine Düse zugeführt wird. Als noch besser hat sich jedoch die Zuführung über eine Belüfterkerze erwiesen.

Belüfterkerzen sind zwar bei der Abwasserverwertung schon in oben offenen Behältern eingesetzt worden, jedoch nicht in Druckbehälternzum Einführen von Druckluft o.dgl.

Insbesondere die Verwendung der Belüfterkerzen ermöglichen nicht nur eine intensive Vermischung von Druckluft und Abwässern, sondern auch eine Verwirbelung im Druckbehälter und eine Feinstverteilung durch die aufsteigenden Blasen.

Die Höhe des Druckes in der Druckleitung und somit in der Belüfterkerze richtet sich einerseits nach der Länge der Rohrleitungen hinter dem Druckbehälter und andererseits nach der Höhe des Abwasserspiegels im Druckbehälter; sie kann daher etwa 0,3 bis 6 bar betragen.

Die unter Druck stehende Abförderung der Abwasser vom Druckbehälter verhindert auch eine Bewegungslosigkeit im Rohrsystem und somit die Bildung von Faulstoffen bzw. auch das Entstehen von Korrosionen im nachgeschalteten Rohrleitungssystem.

Mit dem erfindungsgemäßen Verfahren kann nicht nur die Druckluft, sondern auch jeder andere, insbesondere sauerstoffhaltige gasförmige oder auch gegebenenfalls flüssige Zusatzstoff zugeführt werden, insbesondere beim Einsatz von Düsen auch pulverförmiges Material. Auf der anderen Seite ist es auch möglich, daß durch eine Nebenleitung der Druckleitung ein geschlossener Zusatzbehälter druckbeaufschlagt wird, von welchem ein weiterer Zuschlagstoff dem Druckbehälter von oben her zugeführt wird. Diese Verfahrensmaßnahme eignet sich besonders für Fälle, bei denen die Zuschlagstoffe z. B. in flüssiger Form noch einer Lösung im Zusatzbehälter bedürfen, was vor allen Dingen für Kaliumpermanganat gilt, das bekannterweise besonders hochgradig sauerstoffhaltig ist.

Das Verfahren wird in einem Druckbehälter durchgeführt, der im Bereich seines Bodens mit einer Düse, einer Belüftungskerze o. dgl. versehen ist, welcher mit einer unter Druck stehenden Leitung verbunden ist.
Als Belüftungskerze kann eine zum Beispiel mit folgenden Abmessungen Verwendung finden: 70/40-90 mü. Diese Belüftungskerze weist eine besonders engmaschige Textileinlage auf, so das die Druckluft in sehr fein verteilter Form in den Druckbehälter hineingedrückt wird.

Die Druckluftleitung kann ein Druckventil und der Druckkessel bzw.- behälter eine Entlüftungsleitung mit einem Entlüftungsventil und einem auf den Abwasserspiegel ansprechenden Grenzschalter aufweisen.Zweckmäßigerweise ist die Anlage mit einem druckfesten Zusatzbehälter versehen, welcher einerseits über eine Nebenleitung von der Druckleitung beaufschlagbar und andererseits über eine Leitung mit dem Druckbehälter über ein Drosselventil verbunden ist.

Im Bodenbereich des Druckbehälters kann eine gemeinsame Öffnung für den Einlaß und den Auslaß des Abwassers vorgesehen sein.

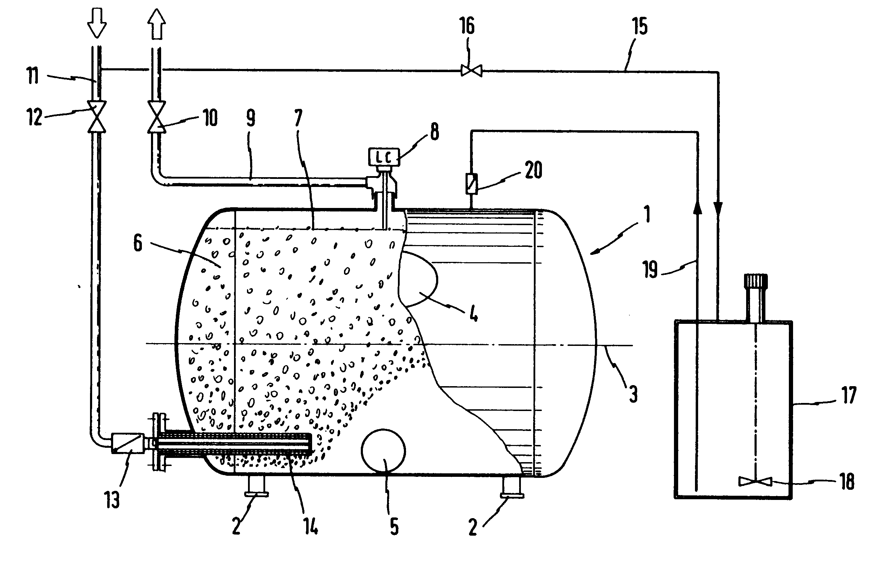

Auf der Zeichnung ist in schematischer Darstellung ein Anwendungsbeispiel für das erfindungsgemäße Verfahren bzw. einer Anlage zur Durchführung des Verfahrens dargestellt;sie wird nachfolgend näher beschrieben.

Ein Druckbehälter oder -kessel 1 ruht auf vier Füßen 2, so daß seine Längsachse 3 im wesentlichen horizontal verläuft.

Der Druckbehälter 1 ist mit einem Mannloch 4 versehen und weist auf der Höhe seines Bodens eine verschließbare Öffnung 5 auf, durch welche einerseits die Abwässer eingeleitet werden und durch welche auch die Entleerung des Druckbehälters erfolgt.

Der Druckbehälter 1 ist mit Abwässern 6 bis zu einem Spiegel 7 gefüllt; die Höhe des Spiegels wird durch einen Grenzschalter 8 abgetastet und unverändert gehalten, so daß nach Füllung des Druckbehälters 1 über den Einlaß 5 der Druckbehälter geschlossen werden kann. Der Grenzschalter 8 ist mit der Entlüftungsleitung 9 verbunden, welche ein Entlüftungsventil 10 aufweist.

Zur Aufgabe von reiner Druckluft ist eine Druckluftleitung 11 mit einem Druckventil 12 versehen und über ein Ventil 13 an eine Belüfterkerze 14 angeschlossen. Die Belüfterkerze 70/40-90 mü ist im Bodenbereich des Druckkessels bzw. -behälters 1 angeordnet und gestattet nicht nur die Zuführung von Druckluft in den Druckbehälter 1 sondern auch vor allem dessen Feinverteilung, so daß die Blasen im Druckbehälter zu einer intensiven Anreicherung der Abwässer mit Druckluft, d.h. also vornehmlich mit Sauerstoff, führen. Durch die in der Belüfterkerze vorgesehene textile Einlage treten sehr kleine Bläschen aus der Belüfterkerze aus, die zu einer Feinverteilung der zusätzlich zugeführten Luft führen. Auf diese Weise erfolgt auch die Druckbeaufschlagung des Druckbehälters 1 über die Belüfterdüse bis zu dem gewünschten Maximaldruck. Nach Erreichen desselben wird die Druckluftzufuhr gesperrt und die Auslauföffnung 5 geöffnet, so daß das nachfolgende Rohrsystem mit den angereicherten Abwässern unter dem gewünschen Druck beaufschlagt wird.

Es ist auch möglich, einen flüssigen Zuschlagstoff über die Druckleitung und die Belüfterdüse zuzuführen; hierbei ist jedoch darauf zu achten, daß die feinmaschige Textileinlage unter Umständen Feinbestandteile in der Flüssigkeit zurückhalten könnte und dann verstopfen würde.

An die Druckluftleitung 11 ist eine Nebenleitung 15 über ein Drosselventil 16 angeschlossen, welche zu einem weiteren geschlossenen Behälter 17 führt. In diesem geschlossenen Behälter kann beispielsweise Kaliumpermanganat in Lösung gebracht werden, wobei der Rührer 18 für eine bessere Durchmischung der Kaliumpermanganatlösung sorgt. Durch die Nebenleitung 15 wird der Behälter 17 druckbeaufschlagt, so daß über die Leitung 19 und ein Ventil 20 dem Druckbehälter 1 von oben die Kaliumpermanganatlösung zugeführt werden kann.

Das erfindungsgemäße Verfahren ist auch bei aufrechtstehenden Druckbehältern bzw. -kesseln anwendbar und eignet sich für alle Größen von Druckkesseln. Die Druckleitung kann von einer beliebigen Druckquelle aus mit einem, die erforderliche Höhe aufweisenden Druck beaufschlagt werden. Für das erfindungsgemäße Verfahren eignen sich neben Düsen insbesondere die beschriebenen Belüfterkerzen in den handelsüblichen Größen.

## Patentansprüche

1. Verfahren zum Behandeln von Abwasser in einem Druckbehälter, in den Druckluft von unten her eingeführt und im Abwasser fein verteilt wird und aus dem durch eine Auslauföffnung des Druckbehälters das mit dem Gas und gegebenenfalls einem weiteren Zusatzstoff behandelte Abwasser abgeführt wird, dadurch gekennzeichnet, daß der Druckbehälter mit der Druckluft auf einen Maximaldruck gebracht und sodann das behandelte Abwasser unter Druck in ein an die Auslauföffnung anschließendes Rohrsystem abgeführt wird.

2. Verfahren nach Anspruch 1, dadurch gekennzeichnet, daß die Druckluft über eine Belüftungskerze eingeführt wird.

3. Verfahren nach Anspruch 1 oder 2, dadurch gekennzeichnet, daß der weitere Zusatzstoff mit Hilfe der Druckluft von oben in den Druckbehälter eingebracht wird.

4. Verfahren nach Anspruch 3, dadurch gekennzeichnet, daß als weiterer Zusatzstoff Kaliumpermanganat eingebracht wird, vorzugsweise in gelöster Form.

## Claims

1. A method of treating effluent in a pressure container into which compressed air is introduced from below and finely distributed in the effluent and from which the effluent which has been treated with the gas and possibly a further additive is discharged through an outlet opening of the pressure container, characterised in that the pressure container is brought to a maximum pressure with the compressed air and then the treated effluent is discharged under pressure into a pipe system which connects to the outlet opening.

2. A method according to claim 1 characterised in that the compressed air is introduced by way of an aeration candle member.

3. A method according to claim 1 or claim 2 characterised in that the further additive is introduced into the pressure container from above by means of the compressed air.

4. A method according to claim 3 characterised in that potassium permanganate is introduced as the further additive, preferably in dissolved form.

**Revendications**

1. Procédé de traitement des eaux usées dans un réservoir sous pression, dans lequel on introduit de l'air sous pression depuis le bas et on le répartit finement dans les eaux usées, et duquel sont évacuées les eaux usées traitées avec le gaz et le cas échéant un autre additif, caractérisé en ce que l'on amène le réservoir sous pression avec l'air sous pression à une pression maximale et qu'on évacue ensuite les eaux usées traitées sous pression dans un système de tuyaux raccordé à l'ouverture de sortie.

2. Procédé selon la revendication 1, caractérisé en ce que l'air sous pression est introduit par l'intermédiaire d'une bougie d'aération.

3. Procédé selon la revendication 1 ou 2, caractérisé en ce que l'additif supplémentaire est introduit à l'aide de l'air sous pression depuis le haut dans le réservoir sous pression.

4. Procédé selon la revendication 3, caractérisé en ce que l'additif supplémentaire introduit est du permanganate de potassium, de préférence sous la forme dissoute.